(19) Europäisches Patentamt
European Patent Office
Office européen des brevets

(11) Veröffentlichungsnummer: **0 335 182 B1**

(12) **EUROPÄISCHE PATENTSCHRIFT**

(45) Veröffentlichungstag der Patentschrift: **06.07.94**

(51) Int. Cl.[5]: **C08K 5/00**, C08L 75/00, C08K 5/13, C08K 5/20, C09J 175/04

(21) Anmeldenummer: **89104662.5**

(22) Anmeldetag: **16.03.89**

# (54) Verwendung von Polyurethanmischungen als Klebstoffe.

(30) Priorität: **29.03.88 DE 3810568**

(43) Veröffentlichungstag der Anmeldung:
**04.10.89 Patentblatt 89/40**

(45) Bekanntmachung des Hinweises auf die Patenterteilung:
**06.07.94 Patentblatt 94/27**

(84) Benannte Vertragsstaaten:
**BE DE ES FR GB IT NL**

(56) Entgegenhaltungen:
**EP-A- 273 864**
**EP-A- 0 192 946**
**DE-A- 2 231 069**
**DE-A- 2 415 104**
**GB-A- 1 158 340**
**GB-A- 1 244 964**
**US-A- 3 875 246**

(73) Patentinhaber: **BAYER AG**

**D-51368 Leverkusen(DE)**

(72) Erfinder: **Beck, Manfred, Dr.**
**Weberstrasse 11a**
**D-5272 Wipperfürth(DE)**
Erfinder: **Müller-Albrecht, Horst, Dr.**
**Roggendorffstrasse 59**
**D-5000 Köln 80(DE)**
Erfinder: **Königshofen, Heinrich, Dr.**
**Am Mühlenberg 26**
**D-5060 Bergisch Gladbach 2(DE)**

**EP 0 335 182 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung bestimmter Polyurethanmischungen als Klebstoffe.

Polyurethane auf Basis von Polyestern als Polyolkomponente werden für viele Anwendungszwecke in Form ihrer Lösungen als Klebstoffe eingesetzt. Es ist ferner aus DE-A 3 502 379 bekannt, Polyurethane in Abmischung mit Polyisocyanaten als Klebstoffe zu verwenden. Je nach Einsatzzweck werden spezielle Polyurethantypen benötigt, z.B. rasch kristallisierende Typen, die i.a. den Nachteil einer kurzen Kontaktklebzeit nach der Wärmeaktivierung haben.

So erfordern modisches Schuhdesign und rationelle Fertigung beispielsweise, daß die aus Lösung auf die zu klebenden Substrate aufgetragenen Klebstoffschichten genügend lange klebrig bleiben, damit die Verbunde sich auch noch nach einer längeren Zeit dauerhaft verbinden lassen. Für eine problemlose Fertigung ist es nun von entscheidender Bedeutung, daß diese Kontaktklebrigkeit, ohne zusätzliche Wärmeaktivierung, nach dem Klebstoffauftrag für einen ausreichend langen Zeitraum bestehen bleibt, und so eine optimale Verarbeitungssicherheit gewährleistet ist. Die gleiche Eigenschaft wird von Klebstoffen gefordert, die z.B. im Do it yourself-Sektor eingesetzt werden.

Um einen reibungslosen Arbeitsablauf bei der Verklebung von Schuhsohlen mit dem Schaft zu gewährleisten, ist dagegen eine verlängerte Kontaktklebezeit nach Wärmeaktivierung wünschenswert.

Aus GB-PS 1 244 964 ist bereits bekannt, die Lagerbeständigkeit von Polyurethanlösungen, die Isocyanate enthalten, durch Zusatz von p-Nitrophenol zu erhöhen. Eine Verbesserung der Kontaktklebzeit wird nicht erwähnt.

Aufgabe der Erfindung war es daher, Mischungen zur Verfügung zu stellen, die eine verbesserte Kontaktklebrigkeit mit und ohne Wärmeaktivierung aufweisen.

Gegenstand der Erfindung ist die Verwendung einer Mischung
aus

A) 30 bis 99 Gew.-Teilen eines weitgehend linearen, endständige OH-Gruppen aufweisenden Polyurethans A,

B) 0,5 bis 40 Gew.-Teilen eines Phenols B1, ausgenommen p-Nitrophenol, und/oder eines aromatischen Carbonsäureamids und/oder eines aromatischen Sulfonsäureamids B2,

C) 0 bis 10 Gew.-Teilen eines Polyisocyanats C,

wobei 100 Gew.-Teile der Mischung gelöst sind in 150 bis 5000 Gew.-Teilen eines Lösungsmittels und wobei in der Feststoff-Mischung maximal 50 Gew.-Teile weiterer Substanzen enthalten sind.

Zur Herstellung von Klebstoffen, die eine verbesserte Kontaktklebrigkeit mit und ohne Wärmeaktivierung aufweisen.

Bei der erfindungsgemäß geeigneten Komponente (A) handelt es sich um weitgehend lineare, endständige Hydroxylgruppen aufweisende, lösliche oder schmelzbare Polyurethane. Die Anwendung dieser Werkstoffe zum Verkleben verschiedener Substrate ist bekannt. Ihre Herstellung ist beispielsweise in der DE-PS 1 256 822, 1 930 336 oder 2 161 340 beschrieben.

Es handelt sich vorzugsweise um auf Basis kristalliner Dihydroxypolyester vom Molekulargewicht 800-8000 unter Verwendung von Kettenverlängerungsmitteln und Diisocyanaten aufgebaute Polyurethane. Gleichermaßen verwendbar sind Polyesterpolyurethane, in denen die Polyesterkomponente aus einer Mischung verschiedener Alkohole hergestellt wurde (DE-A-3 502 379). Solche Polyurethane haben ein günstiges Wärmeaktivierungsverhalten.

Möglich ist auch die Anwendung von Polyether- oder Polyetheresterdiole enthaltenden Reaktionsprodukten mit Polyisocyanaten. Auch analoge Polyurethane, deren Polyesterkomponente ein Polycarbonat ist, oder in denen Polycarbonatgruppen neben Carbonsäureestergruppen vorliegen, sind möglich. Ferner können auch Polyester-Polyurethane verwendet werden, in denen die Säurekomponente eine Mischung aus verschiedenen Carbonsäuren ist. Außer Polyestern auf Basis von C4-Diolen lassen sich auch solche einsetzen, die aus C2- und/oder C3-Diolen bzw. Gemischen daraus mit C4-Diolen hergestellt wurden. Bevorzugt sind die Verfahrensprodukte nach den DE-PS 1 256 822, 1 930 336 und 2 161 340 sowie nach der DE-A-3 502 379.

Die Komponente B ist vorzugsweise farblos oder nur sehr schwach gefärbt, so daß die Farbe bei verklebten Produkten nicht merklich in Erscheinung tritt. Komponente B kann entweder ein Phenol B1 und/oder ein aromatisches Sulfonsäure- oder Carbonsäureamid B2 sein. Die Phenole können ein- oder mehrwertig sein. Vorzugsweise haben die Phenole B einen $pK_A$-Wert von mindestens 7.4.

Bevorzugte Phenole B1 entsprechen der folgenden Formel (I)

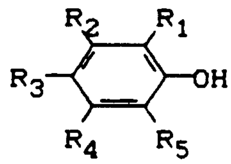

(I)

worin bedeuten:

$R_1$-$R_5$ Wasserstoff, $C_1$-$C_{20}$-Alkyl, $C_5$-$C_8$-Cycloalkyl, substituiertes Cycloalkyl, Alkylarylen bevorzugt mit Alkyl = $C_1$ - $C_{18}$
und Arylen = $C_6H_4$
wobei im Alkylarylensubstituenten die Alkylgruppen durch -COO-Gruppen oder -O- unterbrochen sein können.

Besonders bevorzugte Phenole entsprechend Formel (I) sind Nonylphenol, 4-tert.-Butylphenol, Phenylphenole, 1,2-, 1,3-, 1,4-Dihydroxybenzol sowie deren kernalkylierte Verbindungen.

In einer anderen bevorzugten Ausführungsform handelt es sich bei den Phenolen B1 um mehrkernige Diphenole, beispielsweise
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-sulfoxide,
Bis-(hydroxyphenyl)-sulfone und
$\alpha,\omega$-Bis-(hydroxyphenyl)-diisopropylbenzole,
sowie deren kernalkylierte und kernhalogenierte Verbindungen. Diese und weitere geeignete aromatische Dihydroxyverbindungen sind z.B. in den US-Patentschriften 32 71 367 und 29 99 846 und in den deutschen Offenlegungsschriften 20 63 050 und 22 11 957 aufgeführt.

Erfindungsgemäß einsetzbare Diphenole B1 sind insbesondere solche der Formel (II)

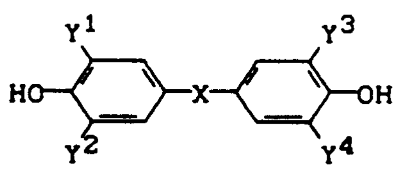

(II)

worin

X eine Einfachbindung oder ein Brückenglied bedeutet, insbesondere $-CH_2-$,

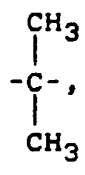

,

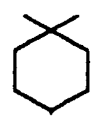

,

O, S, $SO_2$, $CO_2$, CO,

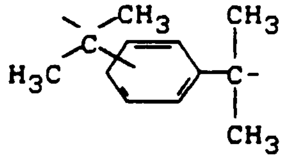

oder $-O-C_6H_4-O-$

$Y^1$-$Y^4$ gleich oder verschieden sind und Wasserstoff, $C_1$-$C_4$-Alkyl, vorzugsweise Methyl, oder Halogen, vorzugsweise Chlor oder Brom bedeuten.

Weitere bevorzugte Diphenole sind beispielsweise
2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis-(3,5-dibrom-4-hydroxyphenyl)-propan,
2,2-Bis-(3,5-dimethyl-4-hydroxyphenyl)-propan,
Bis-(3,5-dimethyl-4-hydroxyphenyl)-methan und
Bis-(4-hydroxyphenyl)-sulfid.

Phenole mit mehr als einer phenolischen OH-Gruppe sind in einer bevorzugten Ausführungsform mit einer phenolischen OH-Gruppe verestert. Besonders bevorzugt sind die mit mehrbasischen Säuren, insbesondere mit Carbonsäuren oder Phosphorsäuren halbseitig veresterten Bisphenole der allgemeinen Formel (II), z.B. der Kohlensäureester des Bisphenol A und daraus herstellbare Oligomere mit endständigen phenolischen Gruppen und der Phosphorsäureester des Bisphenol A. Geeignet sind ferner oligomere Ester aus Bisphenolen und Dicarbonsäuren z.B. aus Terephthal- und/oder Isophthalsäure, die endständig noch mindestens eine phenolische Gruppe tragen.

Amide B2 sind aromatische Carbonsäureamide, die am Stickstoff noch substituiert sein können, z.B. Benzamid, N-Methylbenzamid, Dimethylbenzamid, oder aromatische Sulfonsäureamide wie Toluolsulfonsäureamid, N,N-Diethyl-toluolsulfonsäureamide, N-Methyl-benzolsulfonsäureamid oder N,N-Dimethylbenzolsulfonsäureamid.

Bevorzugte Polyisocyanate C sind aliphatische oder aromatische Polyisocyanate, bevorzugt Triisocyanate; besonders bevorzugt sind z.B. Triphenylmethantriisocyanat oder insbesondere Thionophosphorsäure-tris-(p-iso-cyanatophenylester).

Besonders bevorzugte Lösungsmittel sind Ketone wie Butanon, Aceton, Ester wie Ethylacetat, Methylenchlorid und Toluol. Häufig sind besonders günstig Gemische der obengenannten Lösemittel.

Die erfindungsgemäß zu verwendenden Mischungen stellen wertvolle Klebstoffe bzw. Klebstoffrohstoffe zum Verkleben beliebiger Substrate, insbesondere aber zur Verklebung von Weich-PVC mit sich selbst oder anderen Materialien, dar.

In einer weiteren bevorzugten Ausführungsform werden gleichzeitig ein Phenol B1 und ein aromatisches Säureamid B2 verwendet, insbesondere Bisphenol A und N,N-Diethyl-p-toluolsulfonamid, Bisphenol A und N,N-Dimethyl-p-toluolsulfonamid, Tetramethyl-bisphenol A und N,N-Diethyl-p-toluolsulfonamid, Bisphenol A und N-Methylbenzolsulfonamid, Nonylphenol und N,N-Dimethyl-p-toluolsulfonsäureamid.

Bei Mischungen, die B1 und B2 enthielten, stellte man außer der Erhöhung der Kontaktklebzeit nach Wärmeaktivierung zusätzlich sogar eine Erhöhung der Schälfestigkeitswerte fest. Die Verwendung der unter B genannten Substanzklassen gestattet es daher, aus Polyurethanen, die normalerweise nur nach dem Wärmeaktivierverfahren verklebbar sind, soganannte Kaltklebertypen herzustellen. Diese werden insbesondere im Reparatursektor und im Do it yourself-Bereich eingesetzt. Ferner stellte sich heraus, daß durch Verwendung des Zusatzes schwer verklebbare Ledersorten in der Verarbeitungssicherheit verbessert werden.

Die Mischungen aus den Komponenten A, B und C werden unter Verwendung eines Lösungsmittels angewendet. Als Lösungsmittel kommen niedrigsiedende Flüssigkeiten in Frage.

Die Lösung der Mischungen in den Lösemitteln kann auf üblichem Wege hergestellt werden, wobei durch Versuch leicht zu ermitteln ist, in welcher Reihenfolge die Bestandteile gelöst werden müssen.

Ferner können die Mischungen auch Füllstoffe, Öle, Farbstoffe und weitere Polymere enthalten. Zur Erreichung spezieller Eigenschaften können den Mischungen natürliche oder synthetische Harze wie Phenolharze, Ketonharze, Kolophoniumderivate, Phthalatharze, Acetyl- oder Nitrocellulose zugefügt werden.

Zur Verarbeitung werden Lösungen der vorliegenden Polyesterpolyurethane auf die gegebenenfalls gerauhten oder in anderer Weise vorbehandelten, zu verklebenden Werkstoffoberflächen gebracht. Dies kann mittels Walze, Pinsel, Spachtel, Spritzpistole oder einer anderen Vorrichtung geschehen. Die Klebstoffaufstriche werden zum weitgehenden Abdampfen der in ihnen enthaltenen Lösungsmittel gelagert und erlauben noch eine problemlose Verarbeitung selbst nach 30 bis 120 Minuten nach Klebstoffauftrag. Die Werkstoffe können anschließend mit Preßdruck gefügt werden. Es ist selbstverständlich möglich, auch alle übrigen in der Industrie üblichen Fügeverfahren anzuwenden.

Mit den erfindungsgemäß zu verwendenden Produkten können zahlreiche Werkstoffe, wie Papier, Pappe, Holz, Keramik, Metall und Leder mit hoher Festigkeit verklebt werden. Bevorzugt eignen sie sich zum Kleben von beliebigen Kunststoffen mit sich selbst oder mit anderen Materialien, insbesondere zum

Kleben von weichmacherhaltigen Homo- oder Mischpolymerisaten des Vinylchlorids, vor allem zum Kleben von Sohlen aus diesen Materialien auf Schuhschäfte aus Leder oder Syntheseleder. Auch als Haftvermittler beim Anspritzen von Sohlenmaterialien an den Schaft, z.B. PVC, können die Produkte eingesetzt werden.

Die nachstehenden Beispiele dienen der weiteren Erläuterung der Erfindung.

Beschreibung der Klebstoffkomponenten

Nachstehend sind die Komponenten der Mischungen charakterisiert.

PU1: Polyesterpolyurethan hergestellt aus 1 Mol eines Poly-1,4-butandiol-adipats vom Molekulargewicht 2250 und 0,999 Mol Toluylendiisocyanat (TDI) mit einer Lösungsviskosität (15 %ig in Methylethylketon) von 0,5 bis 1,5 Pa.s.

PU2: Polyesterpolyurethan hergestellt aus 1 Mol eines Poly-1,6-hexandiol-adipats vom Molekulargewicht 2250 und 0,999 Molen Toluylendiisocyanat (TDI) mit einer Lösungsviskosität von 0,5 bis 1,5 Pa.s.

PU3: Polyesterpolyurethan aus 1 Mol Poly-1,6-hexandioladipat vom Molekulargewicht 3000, 0,8 Mol eines Gemisches aus Butandiol-1,4 und Hexandiol-1,6 und 1,799 Mol Diphenylmethandiisocyanat (MDI) mit einer Lösungsviskosität (15 %ig in Methylethylketon) von 1-2 Pa.s.

PU4: Polyesterpolyurethan aus 1 Mol Poly-1,6-hexandioladipat vom Molekulargewicht 2250, 0,9 Mol eines Gemisches aus Butandiol-1,4 und Hexandiol-1,6 und 1,899 Molen Diphenylmethandiisocyanat (MDI) mit einer Lösungsviskosität (15 %ig in Methylethylketon) von 1-2 Pa.s.

PU5: Polyesterpolyurethan aus 1 Mol eines Poly-1,6-hexandiol-adipats vom Molekulargewicht 3000, 1,1 Mol eines Gemisches aus 1,4-Butandiol und 1,6-Hexandiol und 2,099 Molen Diphenylmethandiisocyanat (MDI) mit einer Lösungsviskosität (15 %ig in Methylethylketon) von 1-2 Pa.s.

Polyisocyanat: C1 : Thionophosphorsäure-tris-(p-isocyanatophenylester), Lösung in Methylenchlorid, NCO-Gehalt 5.4 ± 0,2 %.

Der Begriff "phr" steht in folgenden für 1 Gewichtsteil bezogen auf 100 Teile Polyurethan A.

Soweit die Mengen in "Teilen" angegeben werden, handelt es sich, wenn nicht anders vermerkt, um Gewichtsteile.

Ausführung der Verklebungen

Unter Verwendung der nachstehend beschriebenen 20 gew.-%igen Klebstofflösungen wurden Verklebungen von Weich-PVC (30 bzw. 45 Gew.-% Dibutylphthalat) mit einem gefüllten Sohlenmaterial auf Basis von Styrol/Butadien-Blockpolymeren oder mit dem gleichen PVC-Substrat ausgeführt. Nach dem Auftragen auf Streifen von 15 x 3 cm ließ man beide Seiten 30 Minuten ablüften und unterzog dann die Probe mit dem thermoplastischen Kautschuk 4 Sekunden einer Schockaktivierung mit Hilfe eines IR-Strahlers (Funck-Aktiviergerät Typ A 1000).

Sofort danach wurden die Prüfkörper aufeinandergelegt und innerhalb von 10 Sekunden in einer Presse bei Raumtemperatur und einem Druck von 0,4 MPa 10 Sekunden lang verpreßt.

1. Schälfestigkeit

Sofort danach (innerhalb von 30 Sekunden) wurde die erste Prüfung auf Schälfestigkeit in einer Zerreißmaschine ausgeführt (Sofortwert, Abzugsgeschwindigkeit 100 mm/Min.). Eine weitere Prüfung erfolgte nach 1 Tag, eine weitere nach 9 Tagen. Eine Variante bestand darin, daß unmittelbar vor dem Klebstoffauftrag der Lösung 5 phr Polyisocyanat C1 zugefügt wurden. Die Ergebnisse sind jeweils gekennzeichnet durch "ohne" bzw. "mit" Isocyanat.

2. Bestimmung der Kontaktklebzeit nach der Wärmeschockaktivierung (KKZ 70)

Als Material wurde ein handelsübliches, 4 mm dickes Gummimaterial aus Acrylnitril-Butadien-Kautschuk (Acrylnitrilgehalt 33 %, Defo-Härte 700 nach DIN 53 514) mit einem Gehalt an Silikat-Füllstoff von etwa 31 % (Shore-Härte A des Gummimaterials 85 nach DIN 53 505) verwendet.

Zur Prüfung wurden Streifen von 4 cm Länge und 2 cm Breite eingesetzt. Die einem Sohlenmaterial entsprechenden Streifen werden nach dem Klebstoffauftrag einen Tag bei Raumtemperatur offen gelagert und dann 3 Sekunden im Funck-Aktiviergerät Typ A 1000 (70 °C) aktiviert.

Die dem Obermaterial entsprechenden, mit Klebstoff versehenen Streifen werden nicht aktiviert, sondern lediglich 30 Min. bei Raumtemperatur offen gelagert und dann mit einem Streifen, der einen

Aktivierten Klebfilm trägt, sofort nach dessen Aktivierung kreuzförmig übereinandergelegt und 5 Sekunden mit einem Gewicht von 10 N belastet. Nach dem Pressen wird durch Auseinanderziehen der Streifen von Hand die Haftung der Klebfilme beurteilt. Die Prüfung wird in Abständen von je 30 Sekunden nach Aktivierung wiederholt (bis zu 10 Minuten). Die Bestimmung der KKZ 70 wird abgebrochen, sobald die Klebfilme keinen Kontakt mehr aufweisen.

3. Bestimmung der Mindestaktivierungstemperatur (MAT)

Man verfährt wie unter 2 jedoch mit einer Aktivierungstemperatur von 35 °C. 30 Minuten nach der Aktivierung wird der Streifen sofort mit dem 30 Minuten alten, nicht aktivierten Streifen kreuzförmig übereinandergelegt und 5 Sekunden mit einem Gewicht von 10 N belastet.

Nach dem Pressen wird durch Abziehen der Streifen von Hand die Haftung der Klebfilme beurteilt.

Es wird die Mindestaktiviertemperatur ermittelt, bei der die Klebfilme sofort nach dem Aktivieren einen Kontakt aufweisen.

4. Ermittlung der Wärmefestigkeit (WF)

Zwei Streifen PVC, 6 cm lang und 2,5 cm breit, des gleichen Materials wie bei der Ermittlung der Anfangsfestigkeit, werden nach Rauhung mit Schleifband der Körnung 40 mit Klebstoff versehen, 60 Minuten offen bei Raumtemperatur gelagert, dann mit einer Überlappung von 25 mm gefügt und 10 Sekunden bei 3,5 $kp/cm^2$ gepreßt. Die Klebfläche beträgt 2,5 x 2,5 cm. Nach 10 Tagen Lagerung bei Raumtemperatur werden die Klebungen in einen auf 40 °C vorgeheizten automatischen Wärmeschrank mit einer Belastung von 11,2 kp eingehängt. Nach 20 Minuten wird die Temperatur jeweils innerhalb von 20 Minuten um 10 °C gesteigert. Es wird die Temperatur ermittelt, bei der die Trennung der Verklebung erfolgt (WF o/m = Werte ohne/mit Isocyanatzusatz).

5. Kontaktklebzeit bei Raumtemperatur (KKZ-RT)

Auf holzfreiem Karton wird der Klebstoff mit 0,3 mm Dicke aufgetragen. In Abständen von 15 Minuten werden dann 5 mm breite Prüfstreifen kreuzförmig übereinandergelegt und 10 Sekunden mit 50 g gepreßt. Die Bestimmung der Kontaktklebezeit ist beendet, wenn die Klebfilme nicht mehr aneinander haften.

Beispiel 1

Zu einer 20 %igen Lösung von PU3 in einem 1:1-Gemisch (Gewichtsverhältnis) von Aceton und Ethylacetat wurden die angegebenen Mengen Bisphenol A (2,2-Bis-(4-hydroxyphenyl)-propan (BPA) zugefügt. Die klebtechnischen Ergebnisse (Tabelle 1) zeigen die Verbesserung der Kontaktklebzeit nach Wärmeaktivierung (KKZ-70 °C), der Kontaktklebrigkeit bei Raumtemperatur (KKZ-RT) und der minimalen Aktivierungstemperatur (MAT), wobei die Schälfestigkeiten der Klebungen unverändert gut sind.

**Tabelle 1**

| Beispiel | BPA-Zusatz 3) | KKZ-70°C (Min.) | MAT (°C) | WFo/m (°C) | KKZ-RT (Min.) | Schälfestigkeit 2) (N/mm) ohne Isocyanat 1) | | | mit Isocyanat | | |
|---|---|---|---|---|---|---|---|---|---|---|---|
| | | | | | | sof. | 1Tag | 9Tage | sof. | 1Tag | 9Tage |
| Vergleich | 0 | <1 | 50 | 54/93 | <15 | 3,3 | 5,0 | 5,3 | 3,2 | 4,5 | 4,6 |
| 1 A | 5 | 4 | 45 | 50/91 | <15 | 3,9 | 6,7 | 7,1 | 1,1 | 6,2 | 7,2 |
| 1 B | 10 | 6 | 45 | 46/90 | <15 | 2,0 | 5,0 | 6,7 | 1,2 | 6,0 | 6,8 |
| 1 C | 20 | >10 | 45 | 46/82 | 30 | 1,1 | 5,7 | 6,1 | 1,2 | 5,8 | 6,3 |
| 1 D | 30 | >10 | 40 | 44/84 | >120 | 1,2 | 3,5 | 5,3 | 1,0 | 4,2 | 5,5 |

1) Polyisocyanat C1
2) Prüfung an PVC mit 30 % Weichmacher
3) Teile, bezogen auf 100 Teile PU3

Beispiel 2

Zu einer 20 %igen Lösung von PU 4 in einem 3:1-Gemisch (Gewichtsverhältnis) von Aceton und Ethylacetat wurden die in Tabelle 2 angegebenen Mengen Bisphenol A zugefügt und wie beschrieben geprüft (Tabelle 2).

Tabelle 2

| Beispiel | BPA-Zusatz 2) | KKZ-70°C (Min.) | MAT (°C) | WFo/m (°C) | KKZ-RT (Min.) | | Schälfestigkeit 1) (N/mm) ohne Isocyanat sof. | 1Tag | 9Tage | mit Isocyanat sof. | 1Tag | 9Tage |
|---|---|---|---|---|---|---|---|---|---|---|---|---|
| Vergleich | 0 | 1 | 45 | 70/100 | <15 | a) | 3,6 | 6,1 | 6,3 | 3,9 | 5,3 | 5,5 |
| | | | | | | b) | 3,8 | 7,2 | 8,7 | 4,2 | 5,8 | 5,5 |
| 2 A | 5 | 1 | 45 | 70/93 | 15 | a) | 3,6 | 6,4 | 6,8 | 3,6 | 5,2 | 6,2 |
| | | | | | | b) | 3,3 | 6,1 | 6,2 | 4,1 | 3,9 | 4,5 |
| 2 B | 10 | >10 | 45 | 67/90 | 75 | a) | 3,6 | 6,3 | 6,8 | 2,6 | 5,2 | 6,3 |
| | | | | | | b) | 4,5 | 6,9 | 8,0 | 2,8 | 3,2 | 3,9 |
| 2 C | 20 | >10 | 40 | 65/88 | >120 | a) | 2,4 | 5,1 | 5,9 | 2,0 | 5,0 | 6,1 |
| | | | | | | b) | 2,4 | 3,5 | 4,1 | 3,2 | 3,3 | 3,6 |

1) a) Prüfung an PVC mit 30 % Weichmacher
b) Prüfung an PVC mit 45 % Weichmacher
2) Teile bezogen auf 100 Teile PU4

## Beispiel 3

Analog Beispiel 2 wurden Klebstoffmischungen mit Bisphenol A und dem Polyurethan PU5 hergestellt und wie beschrieben geprüft (Tabelle 3).

Tabelle 3

| Beispiel | BPA-Zusatz[1)] | KKZ-70°C (Min.) | MAT (°C) | WFo/m (°C) | KKZ-RT (Min.) | | Schälfestigkeit[2)] (N/mm) ohne Isocyanat sof. | 1Tag | 9Tage | mit Isocyanat sof. | 1Tag | 9Tage |
|---|---|---|---|---|---|---|---|---|---|---|---|---|
| Vergleich | 0 | 1 | 45 | 70/100 | <15 | a) | 3,8 | 5,9 | 6,7 | 3,8 | 6,0 | 6,0 |
| | | | | | | b) | 3,1 | 7,0 | 8,5 | 4,1 | 5,5 | 7,0 |
| 3 A | 5 | 1 | 45 | 70/94 | <15 | a) | 3,5 | 6,1 | 6,8 | 3,1 | 4,6 | 5,7 |
| | | | | | | b) | 3,0 | 7,2 | 8,4 | 3,1 | 4,2 | 4,8 |
| 3 B | 10 | 1 | 45 | 66/92 | 15 | a) | 2,7 | 6,1 | 6,8 | 2,4 | 5,3 | 6,3 |
| | | | | | | b) | 2,5 | 8,0 | 9,0 | 3,2 | 4,2 | 4,9 |
| 3 C | 20 | 8 | 40 | 65/87 | 45 | a) | 2,7 | 5,9 | 6,7 | 1,6 | 5,2 | 6,3 |
| | | | | | | b) | 3,6 | 4,6 | 5,8 | 3,1 | 3,5 | 4,0 |

1) Teile je 100 Teile PU5
2) a) und b) Prüfung jeweils an PVC mit 30 bzw. 45 % Weichmacher

Beispiel 4

Analog Beispiel 2 wurden Klebstoffmischungen mit Bisphenol A und dem Polyurethan PU1 hergestellt und wie beschrieben geprüft (Tabelle 4). Das mit BPA modifizierte PU1 erfüllt die Bedingungen, die an einen Kaltkleber gestellt werden.

**Tabelle 4**

| Beispiel | BPA-Zusatz[1] | KKZ-70°C (Min.) | MAT (°C) | WFo/m (°C) | KKZ-RT (Min.) | | Schälfestigkeit[2] (N/mm) ohne Isocyanat sof. | 1Tag | 9Tage | mit Isocyanat sof. | 1Tag | 9Tage |
|---|---|---|---|---|---|---|---|---|---|---|---|---|
| Vergleich | 0 | 1 | 45 | 45/99 | 15 | a) | 1,2 | 5,4 | 5,5 | 0,9 | 5,6 | 5,8 |
| | | | | | | b) | 2,7 | 3,8 | 3,8 | 1,6 | 3,8 | 3,8 |
| 4 A | 5 | >10 | 40 | 48/95 | 30 | a) | 0,9 | 5,2 | 5,6 | 0,6 | 4,9 | 5,6 |
| | | | | | | b) | 1,7 | 3,2 | 2,8 | 0,6 | 2,7 | 3,4 |
| 4 B | 10 | >10 | 40 | 44/98 | 105 | a) | 0,7 | 4,7 | 5,3 | 0,5 | 4,9 | 5,3 |
| | | | | | | b) | 1,2 | 1,7 | 2,2 | 0,5 | 2,2 | 2,7 |
| 4 C | 15 | >10 | 40 | 43/95 | >120 | a) | 0,6 | 4,1 | 5,0 | 0,3 | 4,0 | 5,6 |
| | | | | | | b) | 0,6 | 1,4 | 1,5 | 0,4 | 1,6 | 2,3 |

1) Teile je 100 Teile PU1
2) a) und b) Prüfung jeweils an PVC mit 30 bzw. 45 % Weichmacher

Beispiel 5

Analog Beispiel 2 wurden Klebstoffmischungen mit Bisphenol A und dem Polyurethan PU2 hergestellt und wie beschrieben geprüft (Tabelle 5).

**Tabelle 5**

| Beispiel | BPA-Zusatz[1] | KKZ-70°C (Min.) | MAT (°C) | WFo/m (°C) | KKZ-RT (Min.) | | Schälfestigkeit[2] (N/mm) ohne Isocyanat sof. | ohne Isocyanat 1Tag | ohne Isocyanat 9Tage | mit Isocyanat sof. | mit Isocyanat 1Tag | mit Isocyanat 9Tage |
|---|---|---|---|---|---|---|---|---|---|---|---|---|
| Vergleich | 0 | 3 | 45 | 51/101 | <15 | a) | 3,7 | 6,3 | 7,0 | 1,6 | 6,3 | 6,2 |
| | | | | | | b) | 3,5 | 7,3 | 8,2 | 3,6 | 5,5 | 5,9 |
| 5 A | 5 | 2 | 45 | 47/102 | <15 | a) | 1,2 | 5,9 | 5,9 | 0,4 | 5,2 | 5,7 |
| | | | | | | b) | 1,6 | 4,4 | 5,9 | 0,4 | 5,2 | 6,6 |
| 5 B | 10 | 3 | 45 | 46/100 | ~15 | a) | 0,7 | 4,8 | 5,3 | 0,3 | 5,2 | 5,3 |
| | | | | | | b) | 0,8 | 4,2 | 5,7 | 0,3 | 4,7 | 5,0 |
| 5 C | 15 | 5 | 40 | 44/99 | ~15 | a) | 0,6 | 4,2 | 5,0 | 0,3 | 4,7 | 5,0 |
| | | | | | | b) | 0,9 | 3,8 | 5,6 | 0,3 | 4,4 | 5,2 |

1) Teile je 100 Teile PU2
2) a) und b) Prüfung jeweils an PVC mit 30 bzw. 45 % Weichmacher

Beispiel 6

In diesem Beispiel wird der Einfluß von Amiden und der synergistische Einfluß von Kombinationen aus Amiden und Phenolen dargelegt. Untersucht wurden 20 Gew.-%ige Lösungen von PU4 in einer Mischung aus Aceton und Ethylacetat (Gewichtsverhältnis 3:1), denen die in Tabelle 6 angegebenen Mengen Amid bzw. Amid + Bisphenol A zugefügt wurden.

Tabelle 6

| Beispiel | Amid Typ[1] | Amid Menge (3) | BPA (3) | KKZ 70° (min) | KKZ RT (min) | MAT (°C) | WFo/m (°C) | Schälfestigkeit[2] (N/mm) ohne Isocyanat sof. | ohne Isocyanat 1Tag | ohne Isocyanat 9Tage | mit Isocyanat sof. | mit Isocyanat 1Tag | mit Isocyanat 9Tage |
|---|---|---|---|---|---|---|---|---|---|---|---|---|---|
| Vergleich | - | 0 | 0 | 1 | <15 | 45 | 70/100 | 3,6 | 6,1 | 6,3 | 3,9 | 5,3 | 5,5 |
| Vergleich | - | 0 | 10 | >10 | 75 | 45 | 67/90 | 3.6 | 6,3 | 6,8 | 2,6 | 5,2 | 6,3 |
| Vergleich | - | 0 | 20 | >10 | >120 | 40 | 65/88 | 2,4 | 5,1 | 5,9 | 2,0 | 5,0 | 6,1 |
| 6 A | 1 | 10 | - | 5 | 15 | 45 | 58/75 | 3,9 | 6,7 | 6,8 | 3,9 | 5,6 | 6,1 |
| 6 B | 1 | 10 | 10 | >10 | >120 | 45 | 58/86 | 3,6 | 5,9 | 6,3 | 4,2 | 5,5 | 6,2 |
| 6 C | 2 | 10 | - | 9 | 30 | 45 | 70/98 | 4,4 | 6,7 | 7,3 | 4,2 | 6,6 | 7,1 |
| 6 D | 2 | 10 | 10 | >10 | >120 | 45 | 68/101 | 3,6 | 6,6 | 6,8 | 2,8 | 5,8 | 6,3 |
| 6 E | 3 | 10 | - | 10 | 15 | 45 | 68/101 | 4,2 | 7,3 | 7,5 | 3,9 | 6,0 | 6,8 |
| 6 F | 3 | 10 | 10 | >10 | 30 | 45 | 70/99 | 4,3 | 6,9 | 7,2 | 3,8 | 6,2 | 6,5 |

1) 1 = Benzamid

2 = N,N-Diethyl-p-toluolsulfonamid

3 = N,N-Diethyl-m-toluylamid

2) Geprüft an PVC mit 30 % Weichmachergehalt

3) Gewichtsteile pro 100 Teile PU 4

Die Versuchspaare 6 A/B und insbesondere 6 C/D belegen den synergistischen Effekt der Paarung Phenol/Amid im Vergleich zu den Proben ohne Zusatz bzw. nur mit Bisphenol A. Auch hier zeigt sich der positive Effekt auf die Endwerte der Schälfestigkeit.

Beispiel 7

Diese Beispiele belegen den Einfluß von p-Toluolsulfonamid in Polyurethanklebstoffen. Zu einer 20 %igen Lösung von PU3 in Aceton wurden die in Tabelle 7 angegebenen Mengen p-Toluolsulfonamid (pTSA) gegeben und wie oben Verklebungen verschiedener PVC-Typen geprüft.

Tabelle 7

| Beispiel | pTSA[1] Tle. | KKZ-70°C (Min.) | MAT (°C) | | Schälfestigkeit[2] (N/mm) ohne Isocyanat sof. | 1Tag | 9Tage | mit Isocyanat sof. | 1Tag | 9Tage |
|---|---|---|---|---|---|---|---|---|---|---|
| Vergleich | 0 | <1 | 50 | a) | 3,3 | 5,0 | 5,3 | 3,2 | 4,5 | 4,1 |
| | | | | b) | 2,7 | 4,9 | 5,1 | 2,2 | 3,6 | 3,8 |
| 10 A | 10 | 4 | 45 | a) | 2,0 | 5,1 | 6,4 | 0,5 | 5,4 | 6,9 |
| | | | | b) | 2,3 | 7,5 | 6,5 | 2,8 | 4,6 | 5,2 |
| 10 B | 20 | 8 | 70 | a) | 0,7 | 0,8 | 0,5 | 0,3 | 6,1 | 6,9 |
| | | | | b) | 0,5 | 0,5 | 0,5 | 1,5 | 5,5 | 6,0 |
| 10 C | 30 | 9 | 75 | a) | 0,7 | 1,5 | 1,5 | 0,4 | 5,0 | 5,5 |
| | | | | b) | 0,4 | 0,6 | 0,6 | 0,4 | 5,4 | 5,2 |

1) Teile je 100 Teile PU3

2) obere Reihe PVC 30, untere Reihe PVC 45

Auch die Zugabe von Sulfonamid liefert eine Verbesserung der KKZ-Werte sowie mit Isocyanat verbesserte Schälfestigkeiten.

Beispiel 8

Das Polyurethan PU1 wurde im Vergleich zu einer Mischung von 100 Teilen PU1 und 10 Teilen Bisphenol A in der Haftung von Leder gegen PVC (30 % Weichmacher) getestet. Die Proben wurden nach dem Ablüften (30 Minuten) 10 Sekunden bei 1 bar verpreßt. Danach wurde das Haftungsvermögen beurteilt.

Tabelle 8

| | Haftung nach | | | | |
|---|---|---|---|---|---|
| | 30 | 45 | 60 | 75 | 120 Min.[1)] |
| PU1 | + | - | - | - | - |
| PU1 + BPA | + | + | + | + | + |

+) ausreichende Haftung
-) nicht ausreichende Haftung

1)Lagerzeit nach dem Ablüften

Beispiel 9

Analog Beispiel 1 wurden anstelle von BPA die in Tabelle 9 angegebenen Phenole zugefügt.

**Tabelle 9**

| Beispiel | Zusatz 1) | KKZ-70°C (Min.) | WF o/m | | Schälfestigkeit 2) (N/mm) ohne Isocyanat sof. | 1Tag | 9Tage | mit Isocyanat sof. | 1Tag | 9Tage |
|---|---|---|---|---|---|---|---|---|---|---|
| Vergleich | 0 | <1 | 49/102° | a) | 3,1 | 4,5 | 4,6 | 0,9 | 5,6 | 5,9 |
| | | | | b) | 2,0 | 4,3 | 6,1 | 0,9 | 6,1 | 6,8 |
| 9 A | a) | <1 | 50/97° | a) | 0,9 | 2,4 | 1,8 | 1,0 | 4,3 | 4,2 |
| | | | | b) | 2,6 | 4,3 | 4,3 | 1,1 | 4,4 | 4,0 |
| 9 B | b) | 5 | 52/98° | a) | 3,0 | 4,6 | 4,5 | 1,6 | 5,8 | 5,0 |
| | | | | b) | 3,0 | 3,2 | 3,5 | 3,0 | 5,2 | 5,0 |
| 9 C | c) | 3 | 53/98° | a) | 4,0 | 6,0 | 7,0 | 2,5 | 4,9 | 5,0 |
| | | | | b) | 4,7 | 4,1 | 6,0 | 2,5 | 4,9 | 5,0 |
| 9 D | d) | 5 | 53/99° | a) | 2,3 | 6,8 | 6,3 | 1,2 | 5,9 | 5,2 |
| | | | | b) | 3,0 | 6,2 | 6,0 | 3,5 | 4,9 | 5,0 |
| 9 E | e) | 5 | 52/98° | a) | 2,8 | 5,8 | 5,6 | 1,6 | 6,1 | 5,9 |
| | | | | b) | 3,0 | 6,1 | 6,2 | 2,4 | 4,9 | 5,2 |

1) 10 Teile je 100 Teile PU3: a) Bisphenol-A-monostearat; b) 4-Hydroxy-3,5-di-tert.-butyl-phenylpropionsäureoctadecylester; c) 2,2'-Methylenbis-6-tert.-butyl-4-methylphenol; d) Nonylphenol; e) $OP(OC_6H_4C(CH_3)_2C_6H_4OH)_3$

2) Obere Reihe mit PVC (30 % Weichmacher), untere Reihe mit PVC (45 % Weichmacher)

Beispiel 10

Nach Beispiel 6D hergestellte Proben wurden nicht, wie dort beschrieben, nach dem Ablüften durch Wärmeaktivierung verklebt, sondern weitere 60 Minuten liegengelassen und danach ohne weitere Wärmebehandlung 10 Sekunden bei 4 bar kalt verpreßt.

Die Schälfestigkeitsbestimmungen sind in Tabelle 10 zusammengefaßt.

Tabelle 10

| Beispiel | Substrat | Schälfestigkeit N/mm ohne Isocyanat sof. | 1Tag | 9Tage | mit Isocyanat sof. | 1Tag | 9Tage |
|---|---|---|---|---|---|---|---|
| 10 A | PVC 30 % Weichmacher | 3,4 | 5,5 | 5,8 | 4,7 | 6,3 | 6,8 |
| 10 B | PVC 45 % Weichmacher | 5,6 | 6,0 | 7,3 | 4,3 | 4,5 | 4,9 |

Die Werte belegen die Anwendbarkeit der Mischung als Kaltkleber.

Beispiel 11

Analog Beispiel 1 wurden aus PU4 und den Tabelle 11 angegebenen Additiven 20 %ige Lösungen hergestellt und geprüft.

Tabelle 11

| Beispiel | Additiv[1] A | Additiv[1] B | KKZ-70° (min.) | MAT °C | WF-o/m °C | KKZ-RT (min.) | | Schälfestigkeit[2] (N/mm) ohne Isocyanat sof. | 1Tag | 9Tage | mit Isocyanat sof. | 1Tag | 9Tage |
|---|---|---|---|---|---|---|---|---|---|---|---|---|---|
| 11A | 10 | 10 | 1 | 45 | 64/100 | 60 | a) | 3,2 | 6,4 | 7,0 | 2,5 | 6,3 | 7,5 |
| | | | | | | | b) | 3,7 | 6,0 | 8,5 | 4,0 | 4,0 | 4,5 |
| 11B | 10 | 20 | 8 | 45 | 61/96 | 80 | a) | 2,5 | 4,4 | 6,5 | 1,5 | 5,0 | 6,8 |
| | | | | | | | b) | 3,2 | 3,4 | 4,5 | 3,0 | 4,2 | 4,5 |
| 11C | - | 30 | 5 | 45 | 57/95 | 120 | a) | 2,1 | 6,4 | 7,9 | 1,4 | 6,1 | 7,5 |
| | | | | | | | b) | 3,3 | 5,2 | 6,5 | 3,3 | 3,6 | 4,8 |

1) A Bisphenol A (phr)
B N-Methyl-benzolsulfonamid (phr)

2) obere Reihe Prüfung an PVC mit 30 % Weichmacher
untere Reihe Prüfung an PVC mit 45 % Weichmacher

## Patentansprüche

1. Verwendung einer Mischung aus
   A) 30 - 99 Gew.-Teilen eines weitgehend linearen, endständige OH - Gruppen aufweisenden Polyurethans A,
   B) 0,5 bis 40 Gew.-Teilen eines Phenols B1, ausgenommen p - Nitrophenol, und/oder eines aromatischen Carbonsäureamids und/oder eines aromatischen Sulfonsäureamids B2,

C) 0 bis 10 Gew.-Teilen eines Polyisocyanats C,
wobei 100 Gew.-Teile der Mischung in 150 - 5000 Gew.-Teilen Lösungsmittel gelöst sind und wobei in der Mischung maximal 50 Gew.-Teile weiterer Substanzen enthalten sind,
zur Herstellung von Klebstoffen, die eine verbesserte Kontaktklebrigkeit mit und ohne Wärmeaktivierung aufweisen.

## Claims

**1.** The use of a mixture of
A) 30 to 99 parts by weight of a substantially linear, OH-terminated polyurethane A,
B) 0.5 to 40 parts by weight of a phenol B1, except p-nitrophenol, and/or of an aromatic carboxylic acid amide and/or aromatic sulfonic acid amide B2,
C) 0 to 10 parts by weight of a polyisocyanate C,
100 parts by weight of the mixture being dissolved in 150 to 5,000 parts by weight of solvent and the mixture containing at most 50 parts by weight of other substances,
for the production of adhesives showing improved contact tackiness with or without heat activation.

## Revendications

**1.** Utilisation d'un mélange de :
A) 30 à 99 parties en poids d'un polyuréthanne A) pratiquement linéaire et portant des groupes OH terminaux,
B) 0,5 à 40 parties en poids d'un phénol B1, à l'exception du p-nitrophénol, et/ou d'un carboxamide aromatique et/ou d'un sulfonamide aromatique B2,
C) 0 à 10 parties en poids d'un polyisocyanate C, 100 parties en poids du mélange étant dissous dans 150 à 5 000 parties en poids de solvant, et le mélange contenant au maximum 50 parties en poids d'autres substances, pour la préparation de colles présentant une durée améliorée de collage au contact avec et sans activation à la chaleur.